# FASCICULE DE BREVET EUROPEEN

(11) **EP 0 831 686 B1**
(45) Date de publication et mention de la délivrance du brevet: **03.02.1999**
(21) Numéro de dépôt: 96917550.4
(22) Date de dépôt: 24.05.1996
(51) Int. Cl.: A01B 3/46

(54) **CHARRUE MULTI-SOCS REVERSIBLE SEMI-PORTEE**
MEHRSCHARIGER ANHÄNGEDREHPFLUG
SEMIMOUNTED REVERSIBLE GANG PLOUGH

(30) Priorité: 29.05.1995 FR 9506314
(43) Date de publication de la demande: 01.04.1998
(73) Titulaire: Etablissements Gregoire Besson et Cie, 49230 Montfaucon-sur-Moine (FR)
(72) Inventeur: BESSON, Patrick, F-49230 Montfaucon-sur-Moine (FR)
(74) Mandataire: Dawidowicz, Armand
(86) Numéro de dépôt international: FR9600786
(87) Numéro de publication internationale: WO9638032

(56) Documents cités:
- WO-A-94/24842
- DE-U- 9 205 779
- FR-A- 2 658 694

## Description

La présente invention concerne une charrue multi-socs réversible semi-portée comportant un grand nombre de socs notamment supérieurs à six et pouvant atteindre dix ou plus.

Dans ces charrues, les corps de labour constitués par deux socs avec versoirs symétriques sont fixés sur une poutre oblique comportant une partie centrale orientée sensiblement selon l'axe de travail avec, de part et d'autre de celle-ci, des parties obliques dirigées vers l'avant et vers l'arrière. Les corps de labour sont fixés sur les parties obliques et la partie centrale de la poutre est montée à rotation autour d'un axe longitudinal sur un support à une ou deux roues, d'un type quelconque connu, par l'intermédiaire d'un dispositif de relevage permettant de soulever l'ensemble de la charrue pour son retournement. Cette charrue présente toutefois une longueur importante puisqu'elle atteint 9 mètres pour les charrues à huit corps et 11 mètres pour les charrues à dix corps. Il en résulte que les dénivellations de terrain se traduisent par une différence de terrage des socs. Ce problème a toutefois été résolu par une charrue du type de celle décrite dans le brevet FR-B-2.616.999 dans laquelle la poutre est constituée d'au moins deux éléments articulés l'un à l'autre, avec des moyens de blocage de l'articulation lors du transport et des manoeuvres.

On a également constaté que la longueur de ces charrues accroît la largeur de jachère en début et en fin de champ puisque les extrémités des sillons sont étagées sur la longueur de la charrue et parce que l'attelage nécessite une surface d'évolution importante pour pouvoir réaligner la charrue.

On est donc toujours à la recherche de solutions qui augmenteraient la maniabilité de la charrue en réduisant parallèlement de manière importante le rayon de braquage.

Le but de la présente invention est donc de proposer une charrue multi-socs réversible semi-portée du type décrit dans FR-B-2.616.999 qui, lorsqu'elle occupe une position de manoeuvre ou de transport, présente une maniabilité accrue par rapport aux charrues traditionnelles.

L'invention concerne à cet effet une charrue multi-socs réversible semi-portée comportant un grand nombre de corps de labour montés sur une poutre constituée d'au moins un élément avant et un élément arrière réunis par une articulation dont l'axe est sensiblement vertical en position de transport et horizontal en position de travail, un organe de commande assurant un pivotement de l'élément arrière par rapport à l'élément avant autour dudit axe d'articulation et bloquant l'articulation à la position angulaire choisie, ladite poutre étant montée à pivotement autour d'un axe longitudinal d'un support ou chariot muni de roues de relevage, caractérisée en ce que les moyens de montage à pivotement de la poutre sur le support sont solidaires de l'élément arrière de ladite poutre, tel que défine dans la revendication 1.

L'action de l'organe de commande en position de transport ou lors des manoeuvres de la charrue produit un pivotement du support, lequel devient donc directionnel, ce qui accroît considérablement la maniabilité de la charrue, attelée à un tracteur, lors des manoeuvres et du transport. Cet organe de commande, qui constitue l'organe de blocage de l'articulation, est bien entendu libéré lors du travail de la charrue.

Selon une forme de réalisation préférée de l'invention, le support comprend deux roues de relevage et l'axe d'articulation des deux éléments de la poutre est disposé sensiblement dans le plan vertical passant par l'axe commun des roues de relevage. La maniabilité est encore améliorée par le pivotement des roues sans glissement qui en résulte.

Avantageusement, l'invention prévoit que ledit organe de commande de l'articulation comprend au moins un vérin double effet articulé sur lesdits éléments de la poutre.

Dans ce cas, de préférence, l'organe de commande de l'articulation comprend deux vérins double effet à montage antagoniste. On obtient ainsi une construction robuste et équilibrée de la charrue.

L'invention sera bien comprise à la lecture de la description suivante d'exemples de réalisation, en référence aux dessins annexés dans lesquels :
la figure 1 représente une vue en plan schématique d'une charrue à huit corps de labour de l'état de la technique représentée en position transport ;
la figure 2 représente une vue en plan schématique d'une charrue à huit corps de labour conforme à l'invention représentée en position travail ;
la figure 3 représente une vue en plan schématique de la charrue de la figure 2 représentée en position transport ;

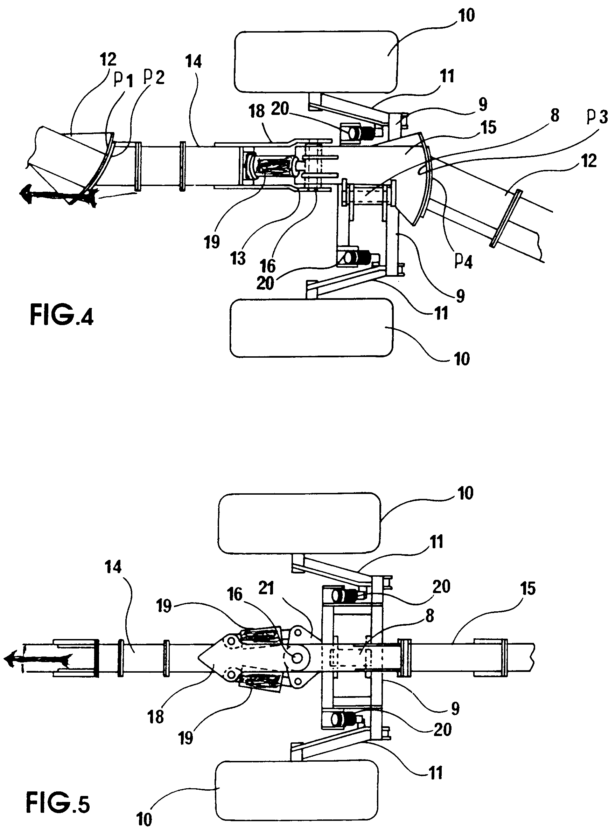

les figures 4 et 5 représentent des vues de détail en plan de l'articulation respectivement en position travail et transport de la charrue représentée à la figure 2 ; et
les figures 6A et 6B représentent des vues en plan schématique des positionnements respectifs du tracteur et de la charrue en fin de raie avec une charrue traditionnelle et une charrue conforme à l'invention.

Dans les dessins, la référence 1 désigne le pont d'attelage sur le tracteur et 2 le dispositif de commande du retournement de la charrue. La référence 3 désigne la flèche de traction qui est solidarisée avec la charrue par une rotule 4. La référence 5 désigne un corps de labour comportant deux socs avec versoirs symétriques, corps qui sont fixés en 6 par un étançon sur une poutre longitudinale 12. La charrue représentée comporte huit corps de labour répartis en un groupe avant 5a et un groupe arrière 5b, chaque groupe comportant quatre corps. La poutre 12 comporte une partie 7 qui est montée à rotation autour d'un axe longitudinal 8 lui-même porté par une traverse ou support 9, formant un chariot porté par deux roues 10 montées à l'extrémité de bras pendulaires 11 dont l'inclinaison peut être réglée par des vérins 20 pour relever ou abaisser le support 9 et, partant, l'ensemble de la charrue pour en régler le terrage ou permettre le retournement ou le passage à la position transport.

A ses extrémités avant et arrière, la partie 7 porte deux éléments de poutre obliques, un élément avant 12a et un élément arrière 12b. Ces éléments de poutre peuvent de façon connue être constitués par des tronçons de poutre réunis par des flasques pour permettre de modifier le nombre de corps de la charrue.

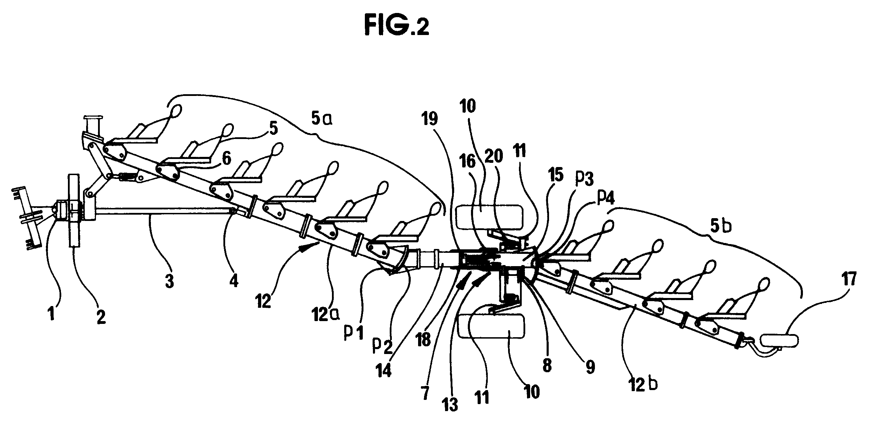

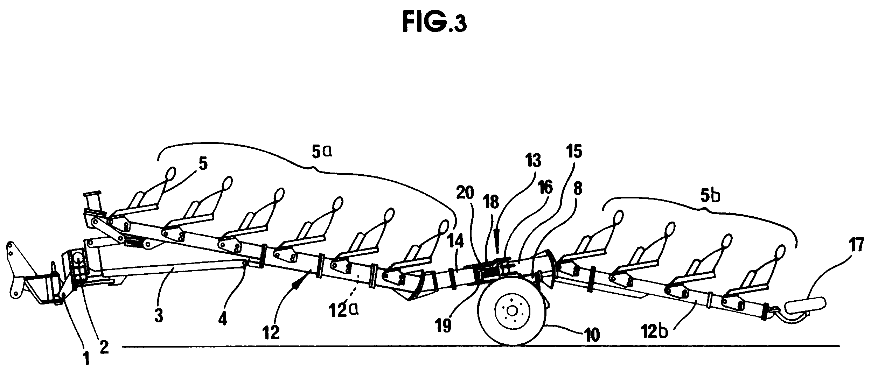

Une articulation, d'axe horizontal en position de travail, désignée dans son ensemble par la référence 13, est réalisée sur la partie 7 de la poutre 12, cette partie 7 comportant un tronçon avant 14 et un tronçon arrière 15 réunis par un axe de pivotement 16. Cette articulation permet de faire varier l'ouverture de l'angle entre les éléments 12a et 12b de la poutre 12 aboutissant, par l'intermédiaire des tronçons 14 et 15 respectivement, à l'articulation 13. Le déplacement de cette articulation est commandé au moyen d'au moins un organe de commande 19, de préférence deux organes de commande, tel qu'un vérin double effet. Dans l'exemple représenté aux figures 2 et 3, la charrue est équipée de deux vérins double effet à action antagoniste. Chaque vérin est monté entre deux éléments en console 21 respectivement solidaires des tronçons 14, 15.

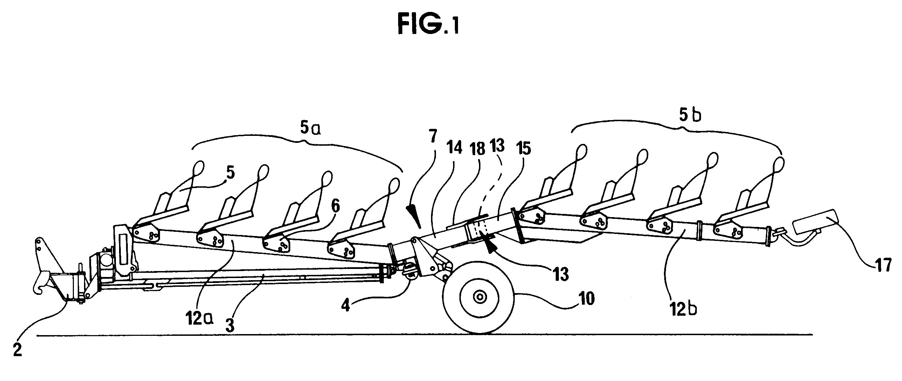

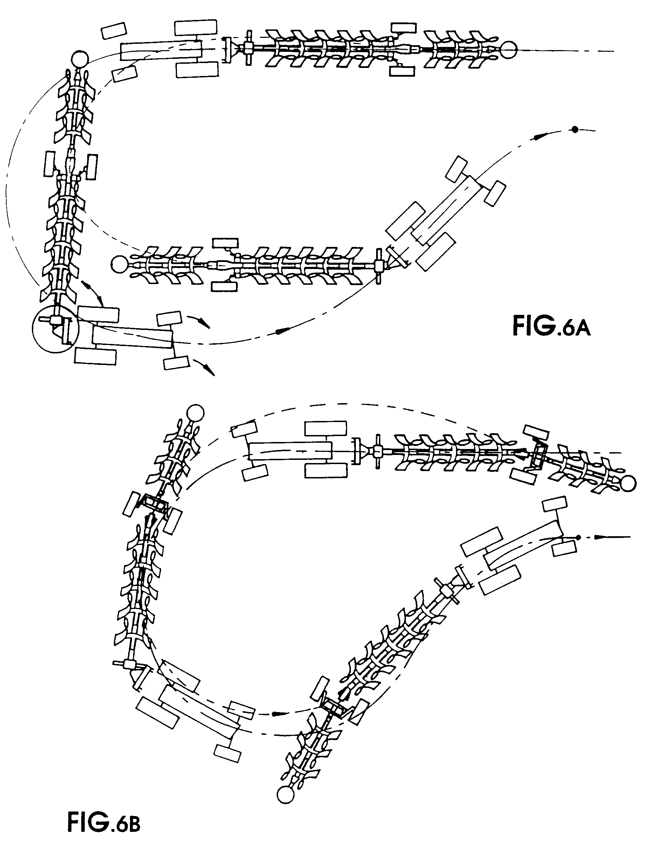

Comme le montrent toutes les figures à l'exception de la figure 1 qui correspond à l'état de la technique, c'est le tronçon arrière 15 de la partie 7 de la poutre 12 qui est monté à rotation autour de l'axe longitudinal 8 porté par le support 9. De ce fait, en position verticale de l'axe 16 de l'articulation 13 correspondant à la position de transport ou lors des manoeuvres, les organes de commande 19 de l'articulation 13 engendrent, au cours du déplacement de cette articulation 13, un déplacement angulaire simultané des roues 10, augmentant ainsi la maniabilité de l'ensemble tracteur/charrue comme le montre la figure 6B comparée à la figure 6A. En effet, le groupe support de roues est, du fait de son positionnement en aval de l'articulation 13, rendu directionnel. Ce n'était pas le cas dans la charrue représentée à la figure 1 où le pont était fixe.

Il est à noter également et ce, de manière connue, qu'en raison de la liberté d'inclinaison donnée aux éléments 12a et 12b de la poutre 12 et pour maintenir le terrage des socs de chaque groupe 5a, 5b, une roue de terrage avant (non représentée) et une roue de terrage arrière 17 sont montées aux extrémités des éléments 12a et 12b. Grâce à l'articulation 13 commandée par les vérins 19, il est possible de relever les socs du groupe de corps de labour 5b tout en mettant les socs du groupe 5a en position de travail, en abaissant la partie 7 et en descendant le point d'attelage 2 sur le tracteur pour amener la roue avant de terrage en appui. Le tronçon avant 14 et le tronçon arrière 15 de la partie 7 de la poutre 12 sont réunis au moyen de deux flasques 18 soudés sur les flancs latéraux du tronçon avant 14, ces éléments comportant deux trous de fixation de l'axe 16. En position de travail ou lors du retournement de la charrue, l'articulation 13 est bloquée au moyen des vérins 19.

Dans l'exemple de réalisation représenté, la liaison des éléments de poutre 12a et 12b à la partie 7 est effectuée par l'intermédiaire de deux plaques de liaison P₁, P₂ et P₃, P₄ respectivement solidaires de l'élément 12a, 12b ou de la partie 7, ces plaques de liaison ayant une courbure concentrique complémentaire en forme de portion de cylindres de révolution. Les plaques P₁, P₂, P₃ et P₄ sont munies de lignes de trous pour la fixation par des boulons avec des obliquités différentes des éléments 12a et 12b qui, bien entendu, restent dans des plans parallèles en travail. Il est ainsi possible de changer de manière simple et économique la largeur de raie.

## Revendications

1. Charrue multi-socs réversible semi-portée comportant un grand nombre de corps de labour montés sur une poutre (12) constituée d'au moins un élément avant (12a) et un élément arrière (12b) réunis par une articulation (13) dont l'axe (16) est sensiblement vertical en position de transport et horizontal en position de travail, un organe de commande (19) assurant un pivotement de l'élément arrière (12b) par rapport à l'élément avant (12a) autour dudit axe d'articulation (16) et bloquant l'articulation (13) à la position angulaire choisie, ladite poutre (12) étant montée à pivotement autour d'un axe longitudinal (8) d'un support ou chariot (9) muni de roues de relevage (10),
caractérisée en ce que les moyens de montage à pivotement de la poutre (12) sur le support (9) sont solidaires de l'élément arrière (12b) de ladite poutre (12) afin que l'action de l'organe de commande (19) en position de transport ou lors des manoeuvres de la charrue, produise un pivotement du support (9), qui devient donc directionnel.

2. Charrue selon la revendication 1,
caractérisée en ce que le support (9) comprend deux roues de relevage (10) et l'axe d'articulation (16) des deux éléments (12a, 12b) de la poutre (12) est disposé sensiblement dans le plan vertical passant par l'axe commun des roues de relevage (10).

3. Charrue selon l'une des revendications 1 et 2,
caractérisée en ce que ledit organe de commande de l'articulation comprend au moins un vérin double effet (19) articulé sur lesdits éléments (12a, 12b) de la poutre (12).

4. Charrue selon la revendication 3,
caractérisée en ce que l'organe de commande de l'articulation comprend deux vérins double effet (19) à montage antagoniste.

5. Charrue selon l'une des revendications 1 à 4,
caractérisée en ce que lesdits éléments avant (12a) et élément arrière (12b) de la poutre (12) sont fixés respectivement aux extrémités d'une partie (7) de la poutre (12) comportant un tronçon avant (14) et un tronçon arrière (15) réunis par ledit axe de pivotement.

6. Charrue selon la revendication 5,
caractérisée en ce que la liaison entre les éléments (12a, 12b) de la poutre (12) et la partie (7) est réalisée respectivement par un couple de plaques de liaison (P₁, P₂; P₃, P₄₎ en forme de portions de cylindres de révolution complémentaires coaxiaux munis de lignes de trous de passage de boulons de fixation en des positions obliques variables des éléments (12a, 12b).

## Claims

1. Semi-mounted plough with multiple reversible ploughshares having a large number of working bodies fitted to a girder (12) made up of at least a forward element (12a) and a rear element (12b) connected by a link (13) whose axis (16) is appreciably vertical when in the transport position and horizontal in the working position, a driving element (19) ensuring the swivelling of the rear element (12b) in relation to the forward element (12a), around the said link axis (16) and locking the link (13) in the chosen angular position, said girders (12) being swivel mounted on the longitudinal axis (8) of a support or carrriage (9) fitted with lifting wheels (10),
characterised in that the means of swivel mounting of the girder (12) on the support (9) and the rear element (12b) of said girder (12) are interdependent, so that the action of the driving element (19) when in the transport position or during manoeuvres of the plough, causes a swivelling of the support (9) which therefore becomes directional.

2. Plough according to claim 1,
characterised in that the support (9) has two lifting wheels (10) and the swivelling axis (16) of the two elements (12a, 12b) of the girder (12) is arranged appreciably in the vertical plane going through the common axis of the lifting wheels (10).

3. Plough according to one of claims 1 and 2,
characterised in that said driving element of the link has at least one double action jackscrew (19) articulated with said elements (12a, 12b) of the girder (12).

4. Plough according to claim 3,characterised in that the driving element of the link comprises two double action jackscrews (19) with opposing fitting.

5. Plough according to one of claims 1 to 4,
characterised in that said forward (12a) and rear (12b) elements of the girder (12) are fixed respectively to the ends of a part (7) of the girder (12) having a forward section (14) and a rear section (14) joined by said swivel pin.

6. Plough according to claim 5,
characterised in that the linking between the elements (12a, 12b) of the girder and the part (7) is respectively made by a couple of linking plates (P₁, P₂;P₃, P₄) in the form of parts of complementary co-axial rotation cylinders provided with rows of holes for holding down bolts for variable sloping positions of the elements (12a, 12b).

## Patentansprüche

1. Mehrschariger Anhängedrehflug, mit einer großen Zahl von Pflügekörpern, die an einem Träger (12) angeordnet sind, der wenigstens durch ein vorderes Element (12a) und ein hinteres Element (12b) gebildet ist, die durch ein Gelenk (13) verbunden sind, dessen Achse (16) in Transportposition im wesentlichen vertikal und in Arbeitsposition im wesentlichen horizontal ist, mit einem Betätigungsorgan (19), das ein Verschwenken des hinteren Elementes (12b) relativ zu dem vorderen Element (12a) um die genannte Achse des Gelenkes (16) bewirkt und das Gelenk (13) in der gewählten Winkelposition blockiert, wobei der Träger (12) um eine in Längsrichtung eines Gestells oder Wagens (9), das bzw. der mit anhebbaren Rädern (10) versehen ist, verlaufende Achse (8) schwenkbar angeordnet ist,
dadurch gekennzeichnet, daß die Mittel zur schwenkbaren Anordnung des Trägers (12) an dem Gestell (9) mit dem hinteren Element (12b) des Trägers (12) verbunden sind, damit die Wirkung des Betätigungsorganes (19) in Transportposition oder bei Manövern des Pfluges ein Verschwenken des Gestells (9) hervorruft, das daher richtungsabhängig wird.

2. Pflug nach Anspruch 1,
dadurch gekennzeichnet, daß das Gestell (9) zwei anhebbare Räder (10) aufweist und daß die Achse des Gelenkes (16) der zwei Elemente (12a, 12b) des Trägers (12) im wesentlichen in der vertikalen Ebene angeordnet ist, die durch die gemeinsame Achse der anhebbaren Räder (10) verläuft.

3. Pflug nach einem der Ansprüche 1 und 2,
dadurch gekennzeichnet, daß das genannte Betätigungsorgan für das Gelenk wenigstens einen doppeltwirkenden Zylinder (19) aufweist, der gelenkig mit den genannten Elementen (12a, 12b) des Trägers (12) verbunden ist.

4. Pflug nach Anspruch 3,
dadurch gekennzeichnet, daß das Betätigungsorgan für das Gelenk wenigstens zwei doppeltwirkende Zylinder (19) aufweist, die gegenwirkend angeordnet sind.

5. Pflug nach einem der Ansprüche 1 bis 4,
dadurch gekennzeichnet, daß das genannte vordere Element (12a) und das genannte hintere Element (12b) des Trägers (12) jeweils mit den Enden eines Teiles (7) des Trägers (12) verbunden ist, das einen vorderen Abschnitt (14) und einen hinteren Abschnitt (15) aufweist, die durch die genannte Schwenkachse miteinander verbunden sind.

6. Pflug nach Anspruch 5,
dadurch gekennzeichnet, daß die Verbindung zwischen den Elementen (12a, 12b) des Trägers (12) und dem Teil (7) jeweils durch ein Paar von Verbindungselementen (P₁, P₂; P₃, P₄) in Form von Abschnitten von komplementären, koaxialen Drehzylindern gebildet ist, die mit Reihen von Löchern zum Durchgang von Bolzen zur Befestigung in variablen schrägen Positionen der Elemente (12a, 12b) verbunden sind.
